# EUROPÄISCHE PATENTSCHRIFT

(11) **EP 1 545 383 B1**
(45) Veröffentlichungstag und Bekanntmachung des Hinweises auf die Patenterteilung: **09.04.2008**
(21) Anmeldenummer: 02766912.6
(22) Anmeldetag: 02.08.2002
(51) Int. Cl.: A61C 11/06

(54) **INCISALFÜHRUNGSTISCH FÜR DENTAL-ARTIKULATOREN OD. DGL.**
INCISAL GUIDING TABLE FOR DENTAL ARTICULATORS OR THE LIKE
TABLE DU GUIDE INCISIF DESTINEE A DES ARTICULATEURS DENTAIRES OU EQUIVALENT

(43) Veröffentlichungstag der Anmeldung: 29.06.2005
(73) Patentinhaber: Gamma Medizinisch Wissenschaftliche Fortbildungs-Ges.m.b.H., 3400 Klosterneuburg (AT)
(72) Erfinder: SLAVICEK, Rudolf, A-1090 Wien (AT)
(74) Vertreter: Holzer, Walter
(86) Internationale Anmeldenummer: PCT/AT2002/000233
(87) Internationale Veröffentlichungsnummer: WO 2004/012623

(56) Entgegenhaltungen:
- DE-U- 29 512 681
- US-A- 2 608 761
- US-A- 3 769 708
- US-A- 4 505 674
- US-A- 5 366 373
- US-A- 5 707 233

## Beschreibung

Die Erfindung betrifft einen Incisalführungstisch für Dental-Artikulatoren od. dgl., die einen Ober- und einen Unterteil aufweisen, welche über ein Gelenk relativ zueinander beweglich sind, wobei der Incisalführungstisch am Ober- oder Unterteil befestigbar ist und eine zu einer Referenzebene geneigte Führungsfläche aufweist, auf der ein Incisalstift mit einer Stützkraft abgestützt werden kann und die mit einer als Normale bezeichneten Wirkungslinie der größten Kraftkomponente der Stützkraft einen Winkel einschließen kann, welcher dem Winkel der Protrusions- oder Laterotrusionsführung am menschlichen Gebiss entspricht, wobei der Incisalstift in der Bewegungssimulation die vorbestimmte Incisalführungsfläche abfahren kann, welche durch Verdrehen, Kippen, Schwenken oder Verschieben eines Führungsflächenblocks bzw. eine Kombination dieser Vorgänge auswählbar und positionierbar ist.

Ein Dental-Artikulator entspricht grundsätzlich einem Bewegungssimulator zur Darstellung von Unterkieferbewegungen, wobei diese Bewegungen sowohl eine Translations- als auch eine Rotationskomponente der Kiefergelenksachse aufweisen. Artikulatoren sind im allgemeinen so, ausgeführt, dass sie aus einem oberen und einem unterem Teil bestehen. Im oberen Teil wird zumeist das Abdruckmodell des Oberkieferzahnbogens und im unteren Teil das Abdruckmodell des Unterkieferzahnbogens montiert. Dabei werden die Modelle in räumlicher Ausrichtung zu einer Referenzebene und zur Kiefergelenksachse der individuellen Patientensituation entsprechend montiert. Der Artikulator ist üblicherweise mit zwei hinteren, das menschliche Kiefergelenk simulierenden Gelenkboxen ausgestattet. Die Gelenkboxen werden in allen Raumrichtung mittels bekannter Methoden patientenindividuell oder auch nach statistischen Mittelwerten eingestellt. Diese posteriore Führungen sind patientenindividuell oder nach statistischen Mittelwerten vorgegeben und definieren die Bewegung der Kiefergelenke in translatorischer Bewegungsrichtung.

Entscheidend für die Rekonstruktion von Okklusionsflächen von Zähnen ist die Bewegung der Zähne zueinander. Der Höcker eines seitlichen Unterkieferzahns gleitet dabei bei der Laterotrusionsbewegung zumeist entlang einer Führungsfläche des entsprechend Gegenzahnes des Oberkiefers. Aus der Art der Führungsflächen aller vorhandenen Seitenzähne und derer gegenseitiger Beeinflussung im Bewegungsablauf ergibt sich ein sogenanntes Okklusionskonzept, welches sich im natürlichen Gebiß zumeist so darstellt, dass bei der anfänglichen Laterotrusionsbewegung alle Zähne führen, aber bei weiterer Exkursionsbewegung des Kiefergelenks die Führungen der vorderen Zähne in einer Sequenz die hinteren Zähne disokkludieren, d.h. der Höcker des Unterkieferzahnes hebt von der Führungsfläche des Oberkieferzahnes ab.

Bei der Anfertigung prothetischer Okklusionsflächen von Zähnen versucht man nun ein solches Okkusionsführungskonzept zu modellieren, um eine möglichst hohe Kaueffizienz in der prothetischen Rekonstruktion zu erzielen. Es gibt neben der oben genannten natürlichen, sequenziellen Führung auch andere Führungskonzepte (Gruppenfunktion, Eckzahnführung, etc.) die aus verschiedenen zahnmedizinischen, zahntechnischen oder materialtechnischen Gründen indiziert sein können.

Um ein Okklusionskonzept im Artikulator allgemein umsetzen zu können, benötigt man einen Incisalführungstisch. Solch ein Tisch geht in einer einfachen Ausführung aus der US 5366373 hervor. Er ist unveränderlich starr mit dem Unterteil des Artikulators verbunden.

Um ein Okklusionskonzept gezielt rekonstruktiv umsetzen zu können, benötigt man einen Incisalführungstisch.

Solche Tische, wie sie beispielsweise aus der DE 29512680 und der DE 29512681 U1 bekannt sind, besitzen eine zu einer Referenzebene geneigte Führungsfläche, auf der der Incisalstift bei der Bewegung gleitet. Durch diese vordere Gleitfläche wird der Artikulator in eine zusätzliche Rotationsbewegung gezwungen, und es ergibt sich daraus gemeinsam mit den posterioren Führungen der beiden Gelenkboxen die Gesamtdefinition der räumlichen Unterkieferewegung. An den Oberkieferzähnen kann somit gezielt die Steilheit und Ausrichtung der Führungsfläche erzeugt werden.

Die Führungsflächen bekannter Incisaltischsysteme sind zumeist entweder fest vorgegeben oder können auf bestimmte Winkel geschwenkt und festgestellt werden. Incisaltischsysteme mit fester Einstellung haben den Nachteil, dass sie in der Bewegungssimulation ein Führungssystem erzeugen, bei dem alle zähne einer Seite bei der Laterotrusionsbewegung gleichzeitig führen. Ein solches Führungskonzept ist häufig nicht erwünscht.

Bei der Verwendung einstellbarer Incisaltischsysteme hat sich die komplizierte Handhabung als nachteilig herausgestellt, weil für die Erzielung von Führungsflächen bei jedem Zahn je nach Konzept ein anderer Wert eingestellt werden muß, der zuvor mittels eines Computerprogrammes aufwendig berechnet und über Tabellen dargestellt wird. Zudem erfordert die Anwendung eines solchen Systems hohe Anforderungen an den Zahntechniker. Oft scheitert die sinnvolle Anwendung und Umsetzung eines Okklusionskonzepts an der Komplexität der Anwendung, aber auch daran, dass der zusätzliche große Aufwand nicht bezahlt wird.

Die Aufgabe der Erfindung besteht darin, einen Incisalführungstisch der einleitend angegebenen Art zu schaffen, der eine einfache Handhabung der Umsetzung vorgegebener Okklusionskonzepte durch Vermeidung komplizierter Berechnungs- und Einstellvorgänge erlaubt und eine Simulation von Laterotrusion-, Protrusions-, Retrusions- und Übergangsbewegungen ermöglicht. Gemäß der Erfindung wird diese Aufgabe dadurch gelöst, dass die Führungsflächen des Führungsblocks die Form einer Wendeltreppe oder die Form einer Schraubenfläche ergeben, wobei die Steigung der Wendel bzw. der Schraubenfläche konstant oder nicht-konstant ausgeführt ist. Vorzugsweise sind die Führungsflächen durch nummerische Verfahren erzeugte Flächen.

Durch diese Lösung wird eine einfache Handhabung der Umsetzung vorgegebener Okklusionskonzepte unter Vermeidung komplizierter Brechungs- und Einstellvorgänge erreicht.

Gemäß einer bevorzugten Ausführungsform der Erfindung ist zur Auswahl der Führungsbahn auf der Führungsfläche die Spitze des Incisalstiftes durch Verdrehen, Kippen, Schwenken oder Verschieben des Incisalstiftes bzw. durch eine Kombination dieser Vorgänge positionierbar. Dabei kann der Führungsflächenblock stufenlos und/oder nach festem Raster verstellbar und durch Klemmung und/oder durch Einrasten fixierbar sein, wobei vorzugsweise die Position mittels einer Skala anzeigbar ist. Zweckmäßig ist es, wenn der Führungsflächenblock durch eine halb- oder vollautomatische Steuerung einstellbar ist.

Gemäß einer anderen Ausführungsform der Erfindung ist bzw. sind die Protrusiv- und/oder Retrusiv- und/oder rechte Laterotrusiv- und/oder linke Laterotrusiv-Führungsflächen des Führungsflächenblocks einstückig.

Im Rahmen der Erfindung ist es zweckmäßig, wenn die Protrusiv- und/oder Retrusiv- und/oder rechte Laterotrusiv- und/oder linke Laterotrusiv- Führungsfläche des Führungsflächenblacks austauschbar ist bzw. sind. Vorzugsweise sind austauschbare Führungsflächensegmente vorgesehen.

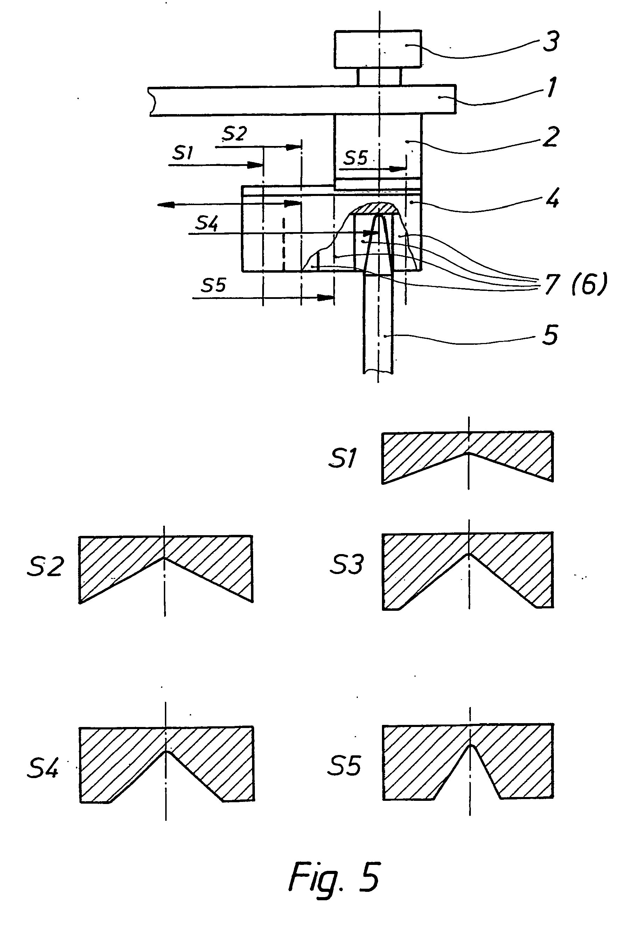

Die Erfindung wird nachfolgend anhand einiger Ausführungsbeispiele unter Bezugnahme auf die Zeichnungen näher erläutert. Es zeigen: Fig. 1 eine schematische Darstellung eines Teiles eines Incisalführungstisches gemäß dem Stand der Technik, die Fig. 2a, b; 3a, b und 4a, b jeweils schematische Ausführungsformen des erfindungsgemäßen Incisalführungstisches in einer teilweise geschnittenen Ansicht, Fig. 5 eine Darstellung der verschiedenen Abschnitte des Führungsflächenblocks und die Fig. 6 und 7 zwei Modelle.

Der dargestellte Incisalführungstisch ist für Dental-Artikulatoren od. dgl. bestimmt, die einen Ober- und einen Unterteil aufweisen, welche über ein Gelenk relativ zueinander beweglich sind. Der Incisalführungstisch ist am Artikulatorober- oder Unterteil befestigbar.

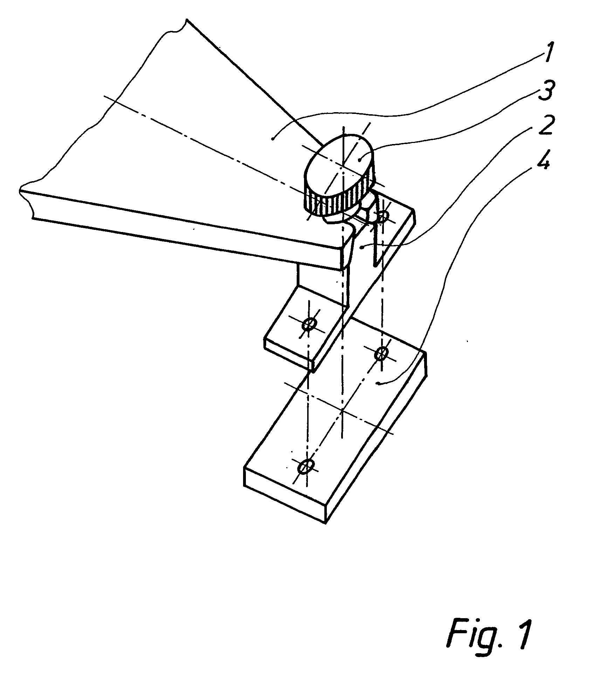

Fig. 1 zeigt einen Artikulatoroberteil 1 gemäß dem Stand der Technik mit einem Träger 2, der mittels einer Befestigung 3 am Artikulatoroberteil befestigt ist. Die Führungsflächeneinstellvorrichtung 4 ist am Träger 2 montiert.

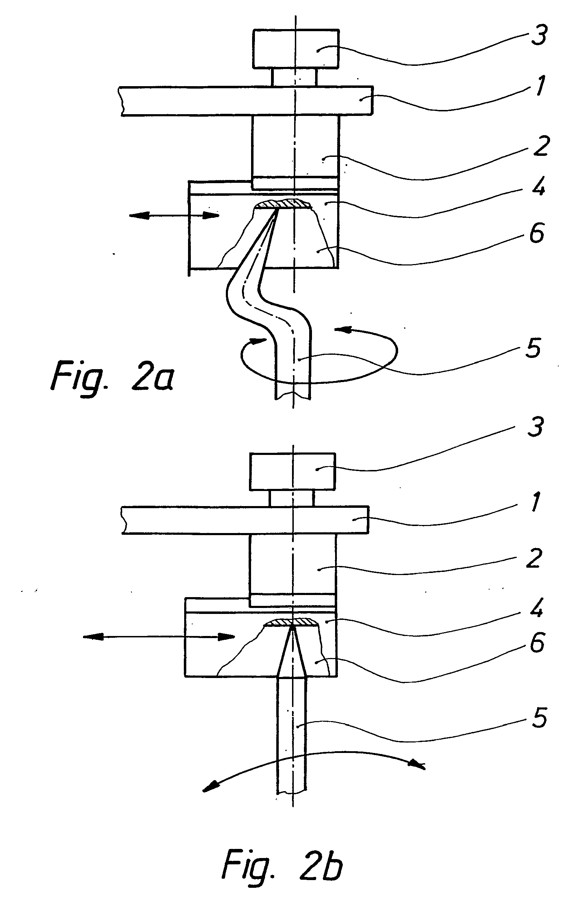

Gemäß Fig. 2a, weist eine erfindungsgemäße Einstelleinrichtung 4 einen exzentrisch gebogenen Incisalstift 5 auf. Durch Drehen des Incisalstiftes 5 entlang seiner unteren Längsachse oder gemäß Fig. 2b durch Schwenken oder Verschieben des Incisalstiftes 5 kann eine Einstellungsänderung erfolgen. Die Spitze des Incisalstiftes 5 kann also durch Verdrehen und/oder Kippen und/oder Schwenken und/oder Verschieben des Incisalstiftes derart positioniert werden, dass eine gewünschte Führungsbahn auf der Incisaltischführungsfläche 6 gewählt wird.

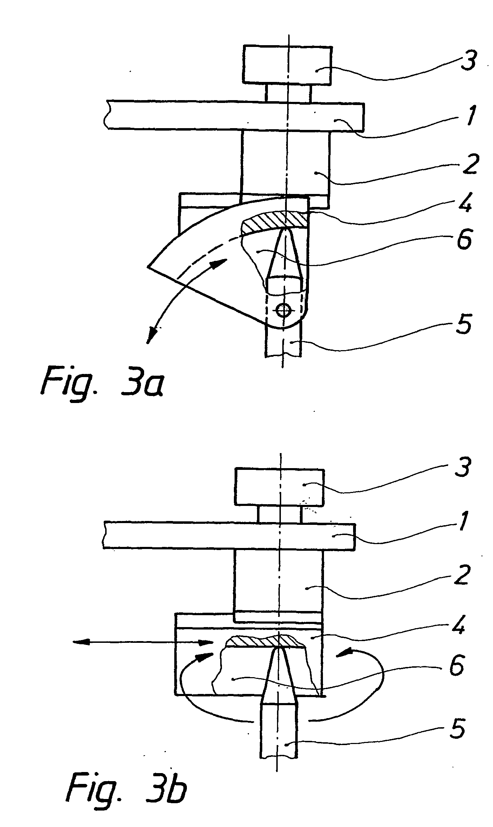

Gemäß Fig. 3a ist bei einer abgewandelten Ausführungsform eine schwenkbare Führungsflächen-Einstelleinrichtung 4 vorgesehen, bei welcher der gedachte Drehpunkt unterhalb liegt oder gemäß Fig. 3b eine horizontal verschiebbare und/oder verdrehbare Führungsflächen-Einstelleinrichtung 4.

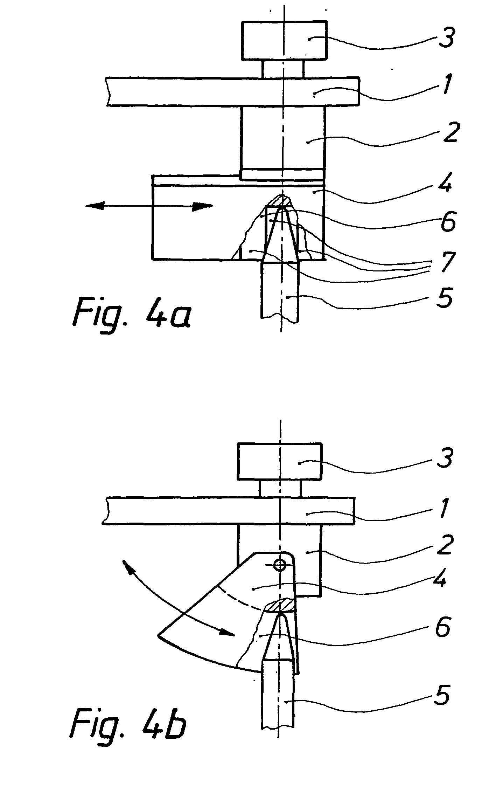

Fig. 4a zeigt eine Ausführungsvariante mit einer horizontal verschiebbaren und/oder verdrehbaren Führungsflächen-Einstelleinrichtung 4, bei welcher die Führungsflächen 6' durch mehreren Flächen in wendeltreppenartiger Anordnung ausgeführt sind, und Fig. 4b eine schwenkbare Führungsflächen-Einstelleinrichtung 4, bei welcher der gedachte Drehpunkt oberhalb liegt.

Die Auswahl der jeweiligen Incisalführungsfläche kann somit durch Verdrehen und/oder Kippen und/oder Schwenken und/oder Verschieben des Führungsflächenblocks 4 erzielt werden, wobei erfindungsgemäß die Führungsflächen-Einstelleinrichtung 4 derart ausgeführt sein kann, dass die Verstellung stufenlos und/oder nach einem festem Raster erfolgt, wobei die Fixierung durch Klemmung und/oder durch Einrasten erfolgen und die Position mittels Skala angezeigt werden kann.

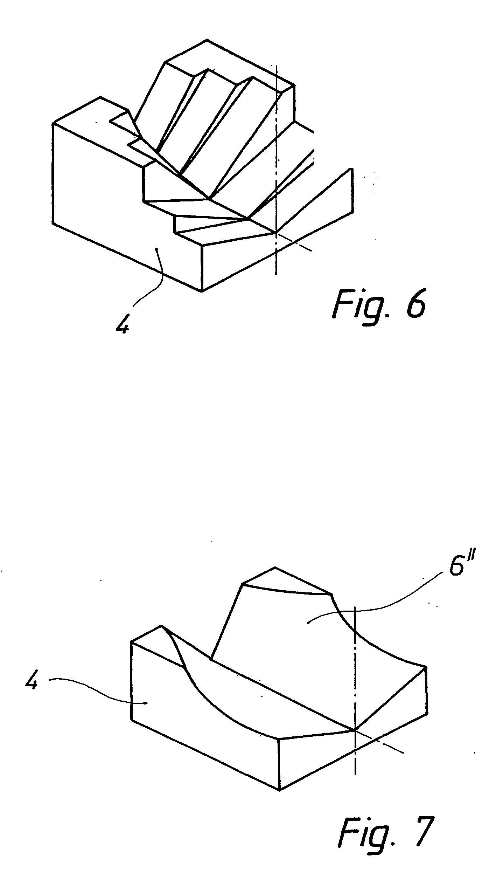

Die Fig. 6 und 7 zeigen einen Führungsflächenblock 4 mit wendeltreppenartiger bzw. schraubenartiger Anordnung der Fläche.

Die Einstellung der Position kann bei einer nicht gezeigten Ausführungsform auch halb- oder vollautomatisch durch eine Steuerung erfolgen.

## Patentansprüche

1. Incisalführungstisch für Dental-Artikulatoren od. dgl., die einen Oberteil (1) und einen Unterteil aufweisen, welche über ein Gelenk relativ zueinander beweglich sind, wobei der Incisalführungstisch am Oberteil (1) oder Unterteil befestigbar ist und eine zu einer Referenzebene geneigte Führungsfläche (6) aufweist, auf der ein Incisalstift (5) mit einer Stützkraft abgestützt werden kann und die mit einer als Normale bezeichneten Wirkungslinie der größten Kraftkomponente der Stützkraft einen Winkel einschließen kann, welcher dem Winkel der Protrusions- oder Laterotrusionsführung am menschlichen Gebiss entspricht, wobei der Incisalstift (5) in der Bewegungssimulation die vorbestimmte Incisalführungsfläche abfahren kann, welche durch Verdrehen, Kippen, Schwenken oder Verschieben eines Führungsflächenblocks (4) bzw. eine Kombination dieser Vorgänge auswählbar und positionierbar ist, **dadurch gekennzeichnet, dass** die Führungsflächen des Führungsblocks (4) die Form einer Wendeltreppe (6') oder die Form einer Schraubenfläche (6") ergeben, wobei die Steigung der Wendel bzw. der Schraubenfläche konstant oder nicht-konstant ausgeführt ist.

2. Incisalführungstisch nach Anspruch 1, **dadurch gekennzeichnet, dass** die Führungsflächen des Führungsflächenblocks (4) durch nummerische Verfahren erzeugte Flächen sind.

3. Incisalführungstisch nach Anspruch 1 oder 2, **dadurch gekennzeichnet, dass** zur Auswahl der Führungsbahn auf der Führungsfläche (6) die Spitze des Incisalstiftes (5) durch Verdrehen, Kippen, Schwenken oder Verschieben des Incisalstiftes bzw. durch eine Kombination dieser Vorgänge positionierbar ist.

4. Incisalführungstisch nach einem der Ansprüche 1 bis 3, **dadurch gekennzeichnet, dass** der Führungsflächenblock (4) stufenlos und/oder nach festem Raster verstellbar und durch Klemmung und/oder durch Einrasten fixierbar ist, wobei vorzugsweise die Position mittels einer Skala anzeigbar ist.

5. Incisalführungstisch nach einem der Ansprüche 1 bis 4, **dadurch gekennzeichnet, dass** der Führungsflächenblock (4) durch eine halb- oder vollautomatische Steuerung einstellbar ist.

6. Incisalführungstisch nach einem der Ansprüche 1 bis 5, **dadurch gekennzeichnet, dass** die Protrusiv- und/oder Retrusiv- und/oder rechte Laterotrusiv- und/oder linke Laterotrusiv-Führungsfläche(n) des Führungsflächenblocks (4) einstückig ist bzw. sind.

7. Incisalführungstisch nach einem der Ansprüche 1 bis 5, **dadurch gekennzeichnet, dass** die Protrusiv- und/oder Retrusiv- und/oder rechte Laterotrusiv- und/oder linke Laterotrusiv-Führungsfläche (n) des Führungsflächenblocks (4) austauschbar ist bzw. sind.

8. Incisalführungstisch nach einem der Ansprüche 1 bis 7, **dadurch gekennzeichnet, dass** austauschbare Führungsflächensegmente (7) vorgesehen sind.

## Claims

1. Incisal guide table for dental articulators or the like having an upper part (1) and a lower part movable relative to one another by means of a joint, wherein the incisal guide table can be fixed to the upper part (1) or lower part and has a guide surface (6) which is inclined relative to a reference plane, on which an incisal pin (5) can be supported by a supporting force and which together with a line of application of the greatest force component of the supporting force referred to as the normal can include an angle corresponding to the angle of the protrusion or laterotrusion guide in a human set of teeth, and wherein, during movement simulation, the incisal pin (5) can move over the predetermined incisal guide surface which can be selected and positioned by rotating, tilting, pivoting or displacing a guide surface block (4) or by a combination of these processes, **characterised in that** the guide surfaces of the guide block (4) are in the form of a spiral staircase (6') or in the form of a screw surface (6"), the pitch of the spiral or of the screw surface being constant or non-constant.

2. Incisal guide table according to claim 1, **characterised in that** the guide surfaces of the guide surface block (4) are surfaces generated by numerical methods.

3. Incisal guide table according to claim 1 or claim 2, **characterised in that** the tip of the incisal pin (5) can be positioned by rotating, tilting, pivoting or displacing the incisal pin or by a combination of theses processes in order to select the guide path on the guide surface (6).

4. Incisal guide table according to one of claims 1 to 3, **characterised in that** the guide surface bock (4) is adjustable continuously and/or according to a fixed pattern and can be fixed by clamping and/or by locking, wherein the position can preferably be indicated by means of a dial.

5. Incisal guide table according to one of claims 1 to 4, **characterised in that** the guide surface block (4) can be adjusted by a semi-automatic or fully automatic control unit.

6. Incisal guide table according to one of claims 1 to 5, **characterised in that** the protrusive and/or retrusive and/or right laterotrusive and/or left laterotrusive guide surface(s) of the guide surface block (4) is/are formed in one piece.

7. Incisal guide table according to one of claims 1 to 5, **characterised in that** the protrusive and/or retrusive and/or right laterotrusive and/or left laterotrusive guide surface(s) of the guide surface block (4) is/are exchangeable.

8. Incisal guide table according to one of claims 1 to 7, **characterised by** exchangeable guide surface segments (7).

## Revendications

1. Table de guide incisif destinée à des articulations dentaires ou équivalentes, qui comporte une partie supérieure (1) et une partie inférieure qui sont mobiles entre elles par l'intermédiaire d'une articulation, dans laquelle la table de guide incisif est fixée sur la partie supérieure (1) ou la partie inférieure et présente une surface de guidage (6) inclinée par rapport à un plan de référence, plan sur lequel peut s'appuyer un axe incisif (5) avec une force d'appui, et la ligne d'action désignée en tant que perpendiculaire de la composante de force maximale de force d'appui peut inscrire un angle qui correspond à l'angle du guidage de protrusion ou du guidage de latérotrusion sur la mâchoire humaine, dans lequel l'axe incisif (5) peut se déplacer dans la simulation de mouvement sur la surface de guide incisif prédéterminée qui, par rotation, basculement, pivotement ou déplacement d'un bloc de surface de guidage (4) ou d'une combinaison de ces opérations est sélectionnable et positionnable, **caractérisée en ce que** les surfaces de guidage du bloc de guidage (4) donnent la forme d'un escalier en colimaçon (6') ou la forme d'une surface filetée (6"), de sorte que l'ascension du colimaçon ou de la surface filetée est d'exécution constante ou non constante.

2. Table de guide incisif selon la revendication 1, **caractérisée en ce que** les surfaces de guidage du bloc de surface de guidage (4) sont des surfaces produites par un procédé numérique.

3. Table de guide incisif selon la revendication 1 ou 2, **caractérisée en ce que**, pour la sélection du trajet de guidage sur la surface de guidage (6), la pointe de l'axe incisif (5) peut être positionnée par rotation, basculement, pivotement ou déplacement de l'axe incisif, ou par une combinaison de ces opérations.

4. Table de guide incisif selon l'une des revendications 1 à 3, **caractérisée en ce que** le bloc de surface de guidage (4) est ajustable en continu et/ou en fonction de crans fixes et peut être fixé par bridage et/ou par encastrement, moyennant quoi la position est de préférence affichable au moyen d'une échelle.

5. Table de guide incisif selon l'une des revendications 1 à 4, **caractérisée en ce que** le bloc de surface de guidage (4) peut être ajusté par une commande semi-automatique ou entièrement automatique.

6. Table de guide incisif selon l'une des revendications 1 à 5, **caractérisée en ce que** la ou les surfaces de guidage protrusif et/ou rétrusif et/ou latérotrusif droit et/ou latérotrusif gauche est ou sont d'un seul tenant.

7. Table de guide incisif selon l'une des revendications 1 à 5, **caractérisée en ce que** la ou les surfaces de guidage protrusif et/ou rétrusif et/ou latérotrusif droit et/ou latérotrusif gauche est ou sont interchangeable.

8. Table de guide incisif selon l'une des revendications 1 à 7, **caractérisée en ce que** sont prévus des segments de surface de guidage (7) interchangeables.
